# EUROPÄISCHE PATENTSCHRIFT

(11) **EP 1 784 321 B1**
(45) Veröffentlichungstag und Bekanntmachung des Hinweises auf die Patenterteilung: **06.02.2008**
(21) Anmeldenummer: 05825746.0
(22) Anmeldetag: 30.11.2005
(51) Int. Cl.: B60R 21/16

(54) **GASSACK ZUM SCHUTZ DES KNIEBEREICHS EINES FAHRZEUGINSASSEN**
GAS BAG FOR PROTECTING THE KNEE AREA OF AN OCCUPANT OF A VEHICLE
SAC A GAZ POUR LA PROTECTION DE LA ZONE DES GENOUX D'UN OCCUPANT DE VEHICULE A MOTEUR

(30) Priorität: 02.12.2004 DE 202004018987 U; 05.08.2005 DE 102005037845
(43) Veröffentlichungstag der Anmeldung: 16.05.2007
(73) Patentinhaber: TAKATA - PETRI AG, 63743 Aschaffenburg (DE)
(72) Erfinder: FRANKE, Dirk, 13187 Berlin (DE); EICHNER, Lutz, 13158 Berlin (DE); ZÄHLE, Günter, 13051 Berlin (DE); TERLUNEN, Andreas, 16567 Mühlenbeck (DE)
(74) Vertreter: Baumgärtel, Gunnar
(86) Internationale Anmeldenummer: PCT/DE2005/002180
(87) Internationale Veröffentlichungsnummer: WO 2006/058531

(56) Entgegenhaltungen:
- EP-A- 1 283 136
- WO-A-01/51317
- US-A- 6 092 836
- US-A1- 2002 171 232
- US-A1- 2004 178 607

## Beschreibung

Die Erfindung betrifft einen Gassack für ein Kraftfahrzeug, der in einem Crash-Fall zum Abstützen der Knie eines Fahrzeuginsassen mit Gas aufblasbar ist nach dem Oberbegriff des Anspruchs 1.

Solche Gassäcke werden üblicherweise auch Kniebag genannt und dienen in einem aufgeblasenen Zustand zur Aufpralldämpfung bzw. zum Abstützen der Knie des Fahrzeuginsassen bei hohen Beschleunigungen des Kraftfahrzeuges. Dies betrifft insbesondere negative Beschleunigungen, bei denen das Kraftfahrzeug in Folge eines Unfalls in einer kurzen Zeitspanne aus einem fahrenden Bewegungszustand abgebremst wird.

Derartige Gassäcke weisen einen Befestigungsbereich auf, mit dem sie an einem Kraftfahrzeugteil befestigt sind. Sie werden insbesondere im Bereich der unteren Instrumententafel eines Kraftfahrzeugs angeordnet.

Beispielsweise in der EP 1 283 136 A1 wird ein Gassack für ein Kraftfahrzeug beschrieben, der in einem Crash-Fall zum Abstützen der Knie eines Fahrzeuginsassen mit Gas aufblasbar ist, und der einen Befestigungsbereich zum Befestigen des Gassackes an einem Kraftfahrzeugteil aufweist.

Bei den bekannten Gassäcken besteht das Problem, dass das Design der Instrumententafel im Kniebereich des Fahrzeuginsassen ein Anordnen eines Kniebags üblicherweise erschwert. Oft ist direkt am Kniebereich kein Platz für einen Airbag, oder das zugehörige Knieairbagmodul muss umständlich so gestaltet werden, dass es sich an das Design der Instrumententafel im Kniebereich anpasst. Weiterhin kann es aufgrund der Befestigung des Gassackes an einem Kraftfahrzeugteil aufgrund des Designs des Kraftfahrzeugteils dazu kommen, dass sich der Gassack in einem ungünstigen Winkel von dem Fahrzeugteil weg entfaltet.

Der Erfindung liegt die Aufgabe zugrunde, einen Kniebag bereitzustellen, auf dessen Entfaltungsrichtung besser Einfluss genommen werden kann.

Diese Aufgabe wird durch einen Gassack mit den Merkmalen des Anspruchs 1 gelöst. Danach weist der Gassack neben einem ersten Befestigungsbereich zum Befestigen des Gassackes an einem Fahrzeugteil einen zweiten, lösbaren Befestigungsbereich auf, der ebenfalls dazu dient, den Gassack an einem Kraftfahrzeugteil zu befestigen. Dabei kann es sich um dasselbe oder ein anderes Kraftfahrzeugteil handeln. Der zweite lösbare Befestigungsbereich und der erste Befestigungsbereich sind an voneinander beabstandeten Stellen des Gassackes ausgebildet. In einer Verbindung zwischen dem zweiten, lösbaren Befestigungsbereich und dem Gassack ist eine Trennstelle zum Lösen der Verbindung unter Krafteinwirkung ausgebildet. Der zweite, lösbare Befestigungsbereich ist so mit dem Gassack verbunden, dass er sich von ihm löst, wenn eine Kraft auf die Verbindung zwischen ihm und den Gassack trifft, die einen vorbestimmbaren Wert übersteigt. Dabei sind der ersten Befestigungsbereich und der zweite, lösbare Befestigungsbereich aus einem Gewebe ausgebildet, aus dem auch der Gassack ausgebildet ist.

Der zweite, lösbare Befestigungsbereich dient also nur solange zum Befestigen des Gassackes am Kraftfahrzeugteil, solange die Verbindung nicht oder nur durch eine geringe Kraft beansprucht wird. Wird jedoch z. B. der Gassack durch einen Krafteinfluss von dem Kraftfahrzeugteil weg gezogen, an dem der zweite, lösbare Befestigungsbereich befestigt ist, so löst sich der Gassack von dem zweiten, lösbaren Befestigungsbereich und somit auch von dem Kraftfahrzeugteil, wenn die Kraft stärker als ein vorbestimmbarer Wert ist. Der Wert wird durch die jeweiligen Materialkomponenten bestimmt. Der erste Befestigungsbereich löst sich dabei nicht vom Gassack ab bzw. aus dem Gassack heraus und bildet aufgrund seiner hohen Stabilität eine feste und bleibende Verankerung des Gassackes am Kraftfahrzeug.

Von daher dient der zweite, lösbare Befestigungsbereich im abgelösten Zustand nicht mehr zum Befestigen des Gassackes, da er zwar auch im abgelösten Zustand weiterhin am Kraftfahrzeugteil befestigt ist, aber nicht mehr am Gassack.

Durch den zweiten Befestigungsbereich wird auf die Entfaltung des Gassackes beim Aufblasen Einfluss genommen, da der Gassack nicht nur wie üblich an mindestens einem fixen Befestigungsbereich mit dem Kraftfahrzeug verbunden ist, sondern auch durch einen lösbaren. Der zweite, lösbare Befestigungsbereich beeinflusst die Entfaltung des Gassackes zumindest solange, solange er mit dem Gassack ungelöst verbunden ist. Nach dem Ablösen des zweiten, lösbaren Befestigungsbereichs kann sich der Gassack frei entfalten. Ein direktes Entfalten des Gassackes in Richtung vom ersten Befestigungsbereich weg wird dadurch vermieden, da der Gassack während des Entfaltungsprozesses zumindest zeitweise auch an einem zweiten Punkt festgehalten wird: an dem zweiten, lösbaren Befestigungsbereich. Dadurch wird der Entfaltungsvorgang des Gassackes gesteuert.

Gleichzeitig wird durch die erfindungsgemäße Lösung die Bildung von einzelnen Kammern im Gassack ermöglicht, durch die ebenfalls Einfluss auf die Entfaltung des Gassackes beim Aufblasvorgang genommen wird.

In einer besonders bevorzugten Ausführungsform löst eine Spannkraft die Verbindung zwischen dem zweiten, lösbaren Befestigungsbereich und dem Gassack, die dann auf die Verbindung wirkt, wenn der Gassack teilweise mit Gas gefüllt ist. Dadurch löst sich der zweite, lösbare Befestigungsbereich während des Aufblasvorgangs des Gassackes von diesem und gibt den Gassack zur vollständigen Entfaltung frei. Dabei ist der vorbestimmbare Wert so bestimmt, dass die vom teilweise gefüllten Gassack auf die Verbindung wirkende Spannkraft ausreichend ist, sie zu lösen. Das Füllvolumen, bei dessen Erreichen die Verbindung gelöst wird, bewegt sich bevorzugt im Bereich zwischen 30 und 80 Prozent des Maximalvolumens. Es kann vorgesehen sein, dass sich zunächst erste Bereiche des Gassackes mit Gas füllen und andere Bereiche ungefüllt bleiben. Bei Füllung der ersten Bereiche wird eine Spannkraft aufgebaut, die den zweiten, lösbaren Befestigungsbereich vom Gassack löst und auch die anderen, bislang ungefüllten Bereiche zum Aufblasen freigibt.

Dadurch, dass der zweite, lösbare Befestigungsbereich entlang der Trennstelle vom Gassack gelöst wird, werden unbeabsichtigte Risse im Material des Gassackes vermieden. Dies kann z. B. dadurch erreicht werden, dass der zweite, lösbare Befestigungsbereich mittels einer Reißleine, einer Reißnaht und/oder einer Perforation als Trennstelle lösbar mit dem Gassack verbunden ist. Beim Lösevorgang würde dann entweder die Reißleine reißen oder die Reißnaht bzw. der zweite Befestigungsbereich entlang der Perforation aufgetrennt werden.

Vorzugsweise löst sich der zweite, lösbare Befestigungsbereich bei geringeren Kräften vom Gassack ab als der erste Befestigungsbereich. Der erste Befestigungsbereich lässt sich zwar durch eine gewaltsame, nicht vorgesehene Krafteinwirkung abreißen, doch hält der erste Befestigungsbereich stärkeren Kräften stand als der zweite, lösbare Befestigungsbereich. Insbesondere hält der erste Befestigungsbereich den Kräften stand, die entstehen, wenn der Gassack aufgeblasen wird. Dabei erfolgt ein vorgesehenes Lösen des zweiten, lösbaren Befestigungsbereiches vom Gassack durch Krafteinwirkung so, dass der Gassack selber zum Abstützen der Knie eines Fahrzeuginsassen funktionsfähig bleibt. Dies kann dadurch geschehen, dass eine Trennstelle in der Verbindung des zweiten, lösbaren Befestigungsbereiches mit dem Gassack nicht im Gassackgewebe selber sondern benachbart dazu ausgebildet ist. Dadurch wird das Gewebe des Gassackes beim Ablösevorgang nicht beschädigt und der Gassack bleibt selber auch ohne den zweiten, lösbaren Befestigungsbereich aufblasbar und kann im Crashfall ein Abstützkissen bereitstellen. So ist gewährleistet, dass im Gassack durch das Ablösen des zweiten, lösbaren Befestigungsbereiches kein Loch bzw. keine undichte Stelle entsteht, die die Funktionsfähigkeit des Gassackes beeinflussen würde.

In einer Ausführungsform ist der zweite, lösbare Befestigungsbereich als Fortsatz, insbesondere als mindestens ein laschenförmiger Fortsatz am Gassack ausgebildet.

Bevorzugt sind die Befestigungsbereiche an einander gegenüberliegenden Enden des Gassackes ausgebildet. Dadurch wird die Beeinflussung der Entfaltung des Gassackes beim Aufblasen am stärksten beeinflusst, da zumindest vor dem Ablösen zwei maximal voneinander entfernte Stellen des Gassackes an ihre Position fixiert sind.

Dabei können die Befestigungsbereiche im ungefalteten Zustand des Gassackes an einander in Längsrichtung des Kraftfahrzeuges gegenüberliegenden Enden des Gassackes ausgebildet sein. Der erste, unlösbare Befestigungsbereich ist im aufgeblasenen Zustand vom Fahrzeuginsassen am weitesten entfernt, während die Stelle, an der im ungelösten Zustand der zweite, lösbare Befestigungsbereich angeordnet war, zum Fahrzeuginsassen weist. Dadurch kann eine zweistufige, abgewinkelte Entfaltung des Gassackes erzielt werden.

In einer Ausführungsform ist der erste und/oder zweite lösbare Befestigungsbereich zur Befestigung an einem Kraftfahrzeugteil in Form eines Halteblechs und/oder eines Gehäuses vorgesehen. Der erste bzw. zweite Befestigungsbereich wird mit dem Blech bzw. Gehäuse verschraubt oder anders an ihm befestigt.

Vorteilhaft umfasst der erste, insbesondere auch der zweite, lösbare Befestigungsbereich eine Gaseintrittsöffnung, durch die hindurch der Gassack mit aus einer Aufblaseinrichtung stammendem Gas aufblasbar ist. Dabei wird der Gassack in gefaltetem Zustand so aufeinander gelegt, dass der erste und der zweite, lösbare Befestigungsbereich und somit die jeweiligen Gaseintrittsöffnungen im Einbauzustand deckungsgleich aufeinander angeordnet sind. Besonders die Ausbildung einer Gaseintrittsöffnung in den ersten Befestigungsbereich ist sinnvoll, da der Gassack an einer Stelle sowieso mit einem Gasgenerator verbunden sein muss, der den Gassack aufblasen kann. Somit ist der Gassack an dieser Stelle in jedem Fall mit einem Teil des Kraftfahrzeuges verbunden. Um die Anzahl der Verbindungspunkte zu reduzieren ist nun im zweiten, lösbaren Befestigungsbereich auch eine Gaseintrittsöffnung ausgebildet, die deckungsgleich über bzw. unter der Gaseintrittsöffnung des ersten Befestigungsbereiches angeordnet ist.

Der erste und der zweite lösbare Befestigungsbereich können wie in dem oben beschriebenen Ausführungsbeispiel an demselben Kraftfahrzeugteil befestigt sein, um die Anzahl der beanspruchten Kraftfahrzeugteile zu minimieren.

Bevorzugt ist der Gassack im Einbauzustand entlang eines Falzes so gefaltet, dass die Befestigungsbereiche an Stellen des Gassackes ausgebildet sind, die durch den Falz voneinander getrennt sind. Dadurch wird eine größere Einflussnahme auf den Entfaltungsvorgang des Gassackes genommen, als wenn die beiden Befestigungsbereiche auf derselben Seite eines Falzes angeordnet wären. Zudem wird der Gassack dann durch den Falz in zumindest zwei Bereich geteilt, von denen einer den ersten, unlösbaren Befestigungsbereich aufweist (und somit üblicherweise auch die Gaseintrittsöffnung) und der andere mit dem zweiten, lösbaren Befestigungsbereich verbunden ist. Gassäcke sind im Einbauzustand üblicherweise gefaltet, um Platz zu sparen und auch durch die Faltung Einfluss auf den Aufblas- bzw. Entfaltungsvorgang zu nehmen.

Besonders bevorzugt ist dabei der Gassack entlang eines Falzes gefaltet, der den ungefalteten Gassack im Wesentlichen halbiert und zu dem die beiden Befestigungsbereiche im Wesentlichen achsensymmetrisch angeordnet sind. Auch hier ist durch die große Beabstandung der Befestigungsbereiche die Einflussnahme auf den Entfaltungsvorgang besonders groß, insbesondere ermöglicht diese Befestigung ein winkliges bzw. "L-förmiges" Entfalten des Gassackes.

Bevorzugt ist der Falz dabei im Einbauzustand des Gassackes im Wesentlichen quer zur Längsrichtung des Kraftfahrzeuges ausgebildet. Dadurch werden die beiden Knie eines Fahrzeuginsassen gleichstark belastet, wenn der Gassack seine entfaltete Position erreicht hat, in der er zum Abstützen der Knie des Fahrzeuginsassen dient. Somit ist diese Anordnung des Falzes besonders knieschonend und wirksam.

In einer Ausführungsform erstreckt sich dabei ein Zusatzfalz im Wesentlichen parallel zum Falz. Der Zusatzfalz ist in einem Bereich des Gassackes ausgebildet, der einer Gaseintrittsöffnung des Gassackes abgewandt ist. Durch den ersten Falz wird der Gassack in einen Bereich mit der Gaseintrittsöffnung unterteilt, der sich beim Aufblasen zuerst mit Gas füllt und in einen Nachströmbereich, dessen Entfaltung durch den Falz behindert wird. Durch den Zusatzfalz in dem Nachströmbereich wird dessen Entfaltung stärker behindert. Alternativ bzw. zusätzlich kann der Nachströmbereich auch eingerollt sein, um auf diese Weise die Entfaltung zu verzögern.

Vorzugsweise sind zwei Seitenbereiche des Gassackes in seinem Einbauzustand entlang zweier sich in Fahrzeuglängsrichtung erstreckender Seitenfalze zum Mittelpunkt des Gassackes hin eingestülpt. Durch das Einstülpen der seitlichen Bereiche wird die Airbageinheit kompakter und ist dadurch leichter in einer Instrumententafel des Kraftfahrzeuges integrierbar, da der Airbag nicht in der vollen Breite in der Instrumententafel eingebaut werden muss.

Dabei ist bevorzugt eine Verbindung zweier Innenseiten des Gassackes vorgesehen, die sich im Wesentlichen quer zur Fahrzeuglängsrichtung und im Wesentlichen zwischen den beiden Seitenfalzen so erstreckt und angeordnet ist, dass durch eine Gaseintrittsöffnung in den Gassack einströmendes Gas in die eingestülpten Seitenbereiche geleitet wird. Die Verbindung kann z.B. als Naht, Verwebung oder Verklebung ausgebildet sein. Durch die Verbindung wird ein Einströmen des Gases zum Mittelpunkt des Gassackes verhindert. Das Gas wird zunächst in die Seitenbereiche eingeleitet, die sich entfalten und somit zum schnellstmöglichen Zeitpunkt einen Knieschutz für einen Fahrzeuginsassen bereitstellen.

Zusätzlich zu dieser als Verbindung ausgebildeten Behinderung des Einströmens in den mittleren Bereich können an den Innenflächen des Gassackes lösbare Verbindungen vorgesehen sein, die an der der Gaseintrittsöffnung abgewandten Seite der Verbindung angeordnet sind und sich im Wesentlichen entlang der Seitenfalze erstrecken. Dadurch wird bewirkt, dass das einströmende Gas die zunächst eingestülpten Seitenbereiche erst vollständig aufbläst und nicht nur die feste Verbindung umgeht und direkt danach wieder in den mittleren Bereich des Gassackes einströmt. Diese zweiten Verbindungen sind lösbar, insbesondere als Reißnähte ausgebildet, und öffnen sich, sobald die Seitenbereiche ausreichend befüllt sind und vorbestimmbare Spannkräfte auf die lösbaren Verbindungen wirken.

Bei dieser Ausführungsform kann es vorgesehen sein, die näher an der Fahrzeuglängsachse angeordnete lösbare Verbindung zu verstärken, z. B. durch eine zweite lösbare Verbindung, die zumindest teilweise parallel zu der ersten lösbaren Verbindung verläuft. Dadurch wird verhindert, dass sich der Gassack beim Entfalten zu stark am Mitteltunnel abstützt und sich dadurch die Lage des Gassackes ungünstig verschiebt.

Die der Erfindung zugrunde liegende Aufgabe wird weiterhin durch ein Verfahren zum Falten eines Gassackes nach einem der vorangegangenen Ansprüche gelöst, wonach der Gassack so entlang eines Falzes gefaltet wird, dass ein erster Bereich des Gassackes, an dem der erste Befestigungsbereich ausgebildet ist, durch den Falz von einem zweiten Bereich des Gassackes getrennt wird, an dem der zweite lösbare Befestigungsbereich ausgebildet ist.

Die Erfindung wird nachfolgend anhand von in Figuren dargestellten Ausführungsbeispielen näher erläutert. Es zeigen:
- Figur 1: einen Querschnitt durch einen Gassack, der unterhalb des Kniebereichs eines Fahrzeuginsassen in einer Instrumententafel angeordnet ist;
- Figur 2: eine schematische Ansicht auf einen Gassack in einem unaufgeblasenen und entfalteten Zustand mit einem fixen und einem lösbaren Befestigungsbereich;
- Figur 3: eine schematische Ansicht auf einen Gassack mit einem fixen und einem lösbaren Befestigungsbereich, wobei zwei seitliche Gassackbereiche so umgefaltet sind, dass die sich ergebende Gassackbreite mit einer vorgegebenen Modulbreite korreliert;
- Figur 4: eine schematische Ansicht auf den Gassack der Figur 3, der zusätzlich quer zur Längsachse so gefalten ist, dass seine zwei Befestigungsbereiche deckungsgleich aufeinander liegen;
- Figur 5: einen schematischer Querschnitt durch den in Figur 4 dargestellten Gassack;
- Figur 6: eine schematische Ansicht auf einen Gassack in einem unaufgeblasenen und entfalteten Zustand mit einem fixen und einem lösbaren Befestigungsbereich, der zusätzliche Nähte zur Beeinflussung seines Aufblasverhaltens aufweist;
- Figur 7: eine schematische Ansicht auf einen Gassack, der durch einen Falz in einen Direkteinströmbereich und einen Nachströmbereich unterteilt wird, wobei letzterer einen Zusatzfalz aufweist und
- Figur 8: einen schematischen Querschnitt durch den zweifach in Fahrzeugquerrichtung gefalteten Gassack der Figur 7.

In den Figuren sind gleiche bzw. ähnliche Merkmale mit dem gleichen Bezugszeichen gekennzeichnet.

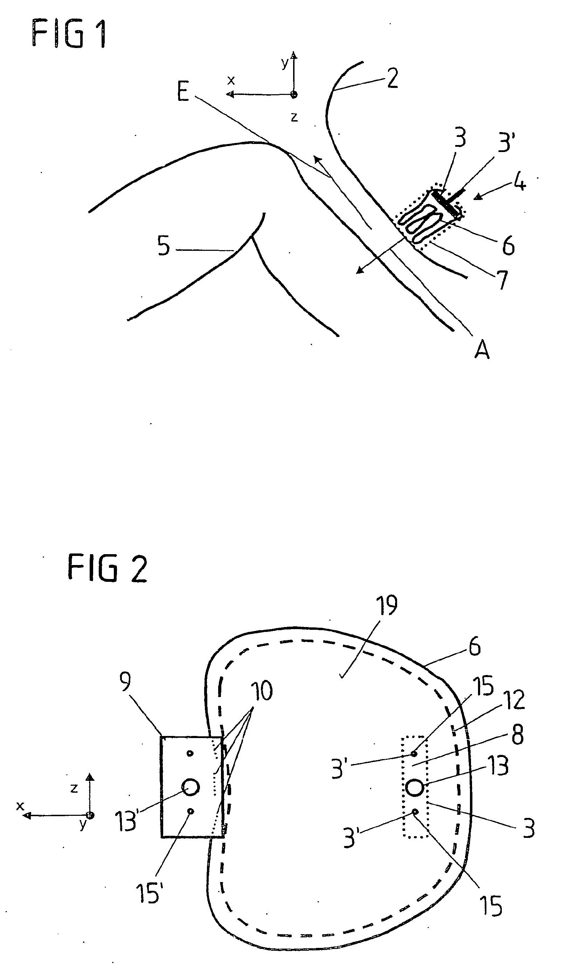

Die Figur 1 zeigt einen Querschnitt durch einen Gassack 6, der Bestandteil eines Knieairbagmoduls 4 ist, das in einer Instrumententafel 2 eines Kraftfahrzeuges angeordnet ist. Zum Verständnis der Positionierung des Knieairbagmoduls 4 ist ein Fahrzeuginsasse 5 bzw. dessen Knie dargestellt, zu dessen Schutz der Gassack 6 dient.

Der Gassack 6 ist an einem Halteblech 3 mit einem Befestigungsfortsatz 3' befestigt, der wiederum an einem Modulgehäuse 7 angeordnet ist. Das Modulgehäuse 7, das Halteblech 3, der Gassack 6 und ein nicht dargestellter Gasgenerator zum Aufblasen des Gassacks im Crashfall bilden das Knieairbagmodul 4. Das Halteblech 3 ist auf der dem Fahrzeuginsassen 5 abgewandten Seite des Modulgehäuses 7 angeordnet, um so dem Gassack 6 ein ungehindertes Entfalten in Richtung zum Fahrzeuginsassen 5 hin zu ermöglichen.

In der Regel bereitet es Schwierigkeiten, ein Knieairbagmodul in einem Kraftfahrzeug so zu positionieren, dass es bei hohen negativen Beschleunigungen, insbesondere in einem Crash-Fall, den darin enthaltenen Gassack 6 so aufbläst, dass die Knie eines Fahrzeuginsassen durch den aufgeblasenen Gassack optimal abgestützt werden. Die Schwierigkeit der Positionierung ergibt sich aus dem Design der Instrumententafel 2, in dessen unterem Bereich das Knieairbagmodul 4 angeordnet ist. Bekannte Kniebags - wie die Gassäcke eines Knieairbagmoduls auch genannt werden - expandieren ausschließlich in einer Ausstoßrichtung A, die senkrecht aus der Instrumententafel 2 heraus und senkrecht auf das Schienbein des Fahrzeuginsassen 5 gerichtet ist. Der in den Figuren beschriebene Kniebag expandiert nun zunächst in Ausstoßrichtung A, breitet sich jedoch, wenn der Gassack 6 teilweise aufgeblasen ist, später in eine Entfaltungsrichtung E aus, die sich im Wesentlichen parallel zum Schienbein des Fahrzeuginsassen 5 erstreckt und von der Mitte des Schienbeins zu dessen Knie weist. In der in Figur 1 dargestellten Ausführungsform ist die Entfaltungsrichtung auch im Wesentlichen parallel zu dem Teil der Instrumententafel 2, in dem das Airbagmodul 4 angeordnet ist. Warum sich der Gassack 6 zunächst in Ausstoßrichtung A und daran anschließend in Entfaltungsrichtung E entfaltet, wird anhand der folgenden Figuren näher beschrieben.

In alle Figuren ist ein Koordinatensystem mit x-, y- und z-Achse eingezeichnet. Das Koordinatensystem ist so ausgerichtet, dass dessen x-Achse mit der Fahrzeuglängsachse zusammenfällt, in das der Kniebag eingebaut wird. Die z-Achse steht senkrecht auf der Fahrzeuglängsachse x und verläuft im Wesentlichen parallel zum Fahrzeugboden. Die y-Achse steht senkrecht auf der Fahrzeuglängsachse x und der z-Achse und verläuft parallel zur vertikalen Fahrzeugachse.

Das in Figur 1 gezeigte Knieairbagmodul 4 erstreckt sich annähernd parallel zur z-Achse und ist zum Schutz beider Knie des Fahrzeuginsassen 5 unterhalb des zu schützenden Kniebereiches angeordnet. Auf Grund der Schräge der Instrumententafel 2 ist die Ausstoßrichtung A des Gassackes 6 bezüglich der horizontalen Fahrzeuglängsachse x nach unten geneigt. Die Entfaltungsrichtung E erstreckt sich bezüglich der Ausstoßrichtung A annähernd im rechten Winkel, die Entfaltung des Gassackes 6 muss also annähernd im rechten Winkel umgelenkt werden. Die spezielle Anordnung des Knieairbagmoduls 4 hat den Vorteil, dass einerseits der prall gefüllte Airbag nicht direkt auf die empfindliche Kniescheibe des Insassen 5 prallt und andererseits darüber Raum für andere Fahrzeugeinbauten, wie z.B. Handschuhfach oder Lenksäulenverkleidung, vorhanden ist.

Die Figur 2 zeigt den Gassack 6 in einem ungefalteten und unaufgeblasenen Zustand. Der Gassack 6 besteht im Wesentlichen aus zwei deckungsgleichen Gewebelagen (Ober- und Unterplatte), die deckungsgleich aufeinander angeordnet sind und die in ihrem Randbereich miteinander durch eine Naht 12 verbunden sind. Alternativ könnten die Ober- und Unterplatte auch miteinander verklebt oder anders aneinander befestigt sein. In Figur 2 ist lediglich die Oberplatte 19 gezeigt, die die darunter liegende Unterplatte abdeckt. Im Inneren des Gassackes 6 ist das Halteblech 3 angeordnet, dessen mindestens ein Befestigungsfortsatz 3' (z. B. Gewindebolzen) an Befestigungsöffnungen 15 durch die Oberplatte 19 aus dem Gassack 6 herausragt.

Bei dem in Figur 2 gezeigten Gassack 6 sind zwei Befestigungsöffnungen 15 vorgesehen, die jeweils in z-Richtung benachbart zu einer Gaseintrittsöffnung 13 angeordnet sind, durch die der Gassack mittels eines nicht dargestellten Gasgenerators aufgeblasen werden kann. Der Bereich der Oberplatte 19, unter dem das Halteblech 3 angeordnet ist, und in dem sowohl die beiden Befestigungsöffnungen 15 als auch die Gaseintrittsöffnung 13 ausgebildet ist, bildet einen ersten Befestigungsbereich 8 aus. Der Befestigungsbereich 8 ist ein fixer, nicht vom Gassack lösbarer Befestigungsbereich, der zum Befestigen des Gassackes 6 am Knieairbagmodul 4 bzw. an dessen Modulgehäuse 7 und somit an einem Teil des Kraftfahrzeuges dient. Ein gewaltsames, nicht vorgesehenes Abreißen des vom Halteblech 3 unterlegten Befestigungsbereiches 8 vom Gassack 6 würde diesen funktionsuntauglich machen, da es ihn beschädigen würde.

Der Befestigungsbereich 8 befindet sich in der Oberplatte 19 und zwar nahe dem Erstreckungsende des Gassackes 6 in x-Richtung, das von dem Fahrzeuginsassen abgewandt ist, also in Richtung Fahrzeugfront weist.

In x-Richtung von dem ersten Befestigungsbereich 8 beabstandet befindet sich eine flexible Lasche 9, die an dem Erstreckungsende des Gassackes 6 angeordnet ist, das zum Fahrzeuginsassen 5 bzw. in Richtung Fahrzeugheck weist. Die Lasche 9 ist aus Gassackgewebe gebildet, kann aber alternativ auch aus einem anderen vorzugsweise flexiblen Material bestehen.

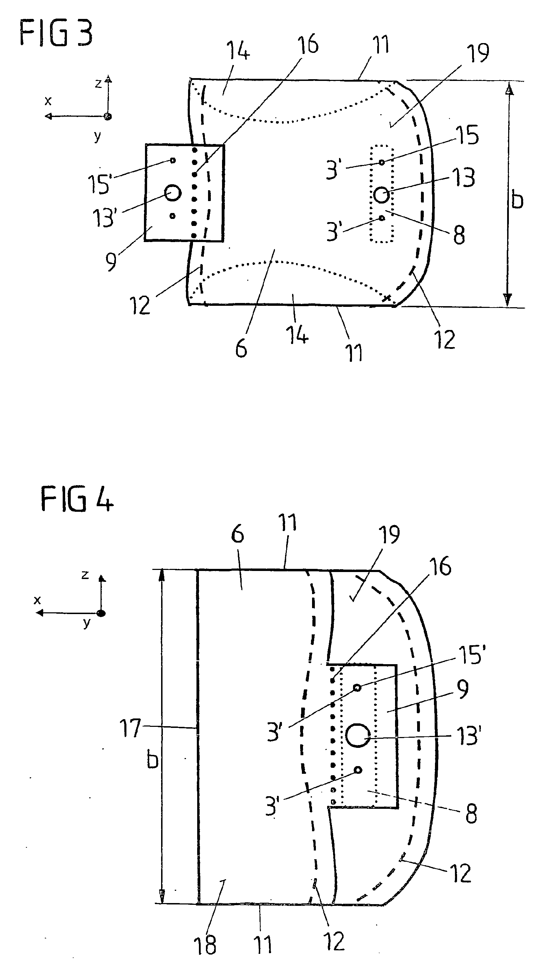

In der Lasche 9 sind zwei Befestigungsöffnungen 15' und eine Gaseintrittsöffnung 13' ausgebildet, die genau so weit voneinander beabstandet sind wie die beiden Befestigungsöffnungen 15 und die Gaseintrittsöffnung 13 des Befestigungsbereiches 8. Tatsächlich werden sie im Einbauzustand deckungsgleich aufeinander geklappt (vgl. Figur 4). Die Lasche 9 weist Reißnähte 10 auf, mittels derer sie an dem Gassack 6 angebunden ist. Die Reißnähte 10 bzw. der Faden, mit dem die Reißnähte genäht wurden, weisen eine wesentlich geringere Reißfestigkeit auf als die Lasche 9 selber. Von daher wird die Lasche 9 bei einer Relativbewegung der Lasche 9 zum Gassack 6 von diesem abreißen, wenn eine bestimmte Spannkraft erreicht ist. Beim Lösevorgang trennt sich die gesamte Lasche 9 vom Gassack 6, indem die Reißnähte 10 aufreißen. Die Kraft, die zum Ablösen der Lasche 9 vom Gassack 6 notwendig ist, wird durch die Länge der Reißnähte 10, die Nahtausführung sowie durch die verwendete Fadenstärke bestimmt:

Mitsamt der Reißnähte 10 bildet die Lasche 9 einen zweiten, vom Gassack lösbaren Befestigungsbereich des Gassackes aus, der wie der erste Befestigungsbereich 8 im Modulgehäuse 7 des Knieairbagmoduls 4 befestigbar ist.

Die Figur 3 zeigt eine alternative Ausführungsform des Gassacks 6, der zunächst wie der Gassack 6 der Figur 2 angeordnet ist. Der Gassack 6 der Figur 3 ist entlang zweier Seitenfalze 11 so gefaltet, dass zwei Seitenbereiche 14 zum Mittelpunkt des Gassackes 6 hin eingestülpt sind. Die Seitenfalze 11 verlaufen parallel zur Fahrzeuglängsachse x und auch im Wesentlichen parallel zur direkten Verbindungsachse der beiden Befestigungsbereiche 8 und 9. Die Seitenbereiche 14 des Gassacks 6 sind soweit in den Gassack 6 hereingefaltet, dass der Gassack 6 entlang seiner z-Erstreckungsrichtung eine Modulbreite b aufweist, die der Breite des Knieairbagmoduls 4 entspricht. Beim Einschieben des Gassacks 6 in das Knieairbagmodul 4 stehen also die Seitenbereiche 14 nicht mehr über die seitliche Ausdehnung des Knieairbagmoduls 4 hinaus.

Die Faltung des Gassackes 6 kann entweder durch Umschlagen oder Einstülpen der seitlichen Bereiche 14 erfolgen und stellt einen ersten Schritt der Faltung des Gassackes dar.

Alternativ zum Gassack 6 der Figur 2 ist die Lasche 9 des Gassackes 6 der Figur 3 mittels einer, der Verbindung von Ober- und Unterplatte dienenden, durchgehenden Naht 12 fest am Gassack 6 angebunden. Eine Perforation 16 ist in der Lasche 9 ausgebildet, entlang der die Lasche 9 beim Lösevorgang entzwei reißt und den Teil der Lasche 9, in dem die Befestigungsöffnungen 15' und die Gaseintrittsöffnung 13' ausgebildet sind, von dem Teil trennt, der weiterhin am Gassack 6 befestigt ist. Somit bildet in diesem Fall nur der ablösbare Teil der Lasche 9 den zweiten, lösbaren Befestigungsbereich des Gassackes 6, während der restliche Teil der Lasche als Rest mittels Naht 12 am Gassack 6 befestigt bleibt.

Die Figur 4 zeigt einen zweiten Faltungsschritt eines weiteren Gassackes 6, der auch wie der der Figur 3 gefaltet war. Der Gassack 6 ist entlang eines in z-Richtung verlaufenden Falzes 17 gefaltet. Der Falz 17 steht senkrecht auf einer gedachten, nicht gezeichneten Verbindungslinie der beiden Befestigungsbereiche und schneidet die Verbindungslinie exakt mittig zwischen den beiden Gaseintrittsöffnungen 13 und 13'.

Die Faltung des Gassackes 6 entlang des Falzes 17 erfolgt so, dass die Befestigungsöffnungen 15' der Lasche 9 jeweils auf den Befestigungsöffnungen 15 des Befestigungsbereiches 8 zu liegen kommen. Gleiches gilt für die Gaseintrittsöffnung 13'.

In der linken Hälfte der Figur 4 befindet sich die Unterplatte 18 auf der dem Betrachter zugewandten Seite (Oberseite) des Gassackes 6, während in der rechten Hälfte ein Stück des Gassackes 6 unter der Lasche 9 hervorsteht, bei dem die Oberplatte 19 die darunter angeordnete Unterplatte 18 verdeckt.

Die Faltung erfolgt derartig, dass die Breite des Gassackes 6 weiterhin der Modulbreite b entspricht. Die den Gassack seitlich begrenzenden Seitenfalze 11 verlaufen parallel zur x-Achse.

Beim Gassack 6 der Figur 4 ist die Lasche 9 - im Unterschied zu den vorangegangenen Ausführungsbeispielen - als Fortsatz der Unterplatte 18 ausgebildet und weist wie die Lasche 9 des Gassackes der Figur 3 eine Perforation 16 auf, die ein Ablösen der Lasche 9 vom Gassack 6 ermöglicht. Es ist auch denkbar, die Lasche 9 stattdessen als Fortsatz der Oberplatte 19 auszubilden und mit einer Perforation zu versehen.

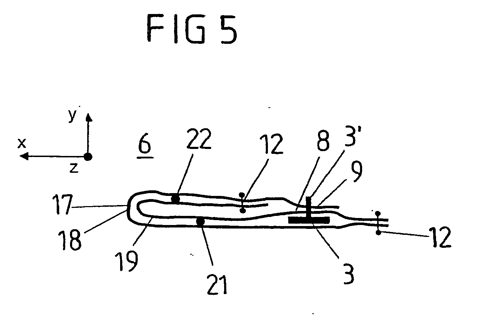

Die Figur 5 zeigt einen Querschnitt durch den in Figur 4 gezeigten Gassack 6. Der Befestigungsfortsatz 3' des Haltebleches 3 durchgreift die Befestigungsöffnungen 15 des Befestigungsbereiches 8 sowie die Befestigungsöffnungen 15' der darüber angeordneten Lasche 9. Der Falz 17 weist dabei zu dem in Figur 1 dargestellten Fahrzeuginsassen 5 (bzw. zum Fahrzeugheck). Der Gassack ist so gefaltet, dass durch den Falz 17 die Oberplatte 19 im Inneren des Gassackes 6 auf sich selber zu liegen kommt. Nach außen wird der Gassack 6 in dieser gefalteten Form im Wesentlichen von der Unterplatte 18 begrenzt. Beim weiteren Einbau in das Modulgehäuse 7 und in das Kraftfahrzeug wird der derart vorgefaltete Gassack 6 über die Befestigungsfortsätze 3' mit dem Modulgehäuse 7 verbunden und an diesem festgeklemmt. Gleichzeitig mit den Befestigungsfortsätzen 3' wird auch die Lasche 9 fest am Gehäuse fixiert. Anschließend wird der Gassack weiter zusammengefaltet und im Modulgehäuse 7 verstaut.

Alternativ zu dieser Einbauweise kann der Gassack 6 auch komplett außerhalb des Modulgehäuses 7 gefaltet und anschließend mit diesem verbunden werden. Der Einbauzustand des Gassackes 6 und das des Knieairbagmoduls 4 ist in der Figur 1 gezeigt.

Anhand der Figuren 1 und 5 wird nachfolgend der Entfaltungsvorgang des Gassackes 6 beschrieben: Nach einer Zündung des nicht dargestellten Gasgenerators strömt Gas durch die Einströmöffnung 13' und die darunter liegende Einströmöffnung 13. Während die Einströmöffnung 13' jedoch nur zwei gegenüberliegende Seiten der Lasche 9 miteinander verbindet und somit ohne Auswirkungen durchströmt wird, verbindet die Einströmöffnung 13 das Innere des Gassackes 6 mit dem Äußeren und dient zum Aufblasen des Gassackes 6. Das Gas strömt durch die Einströmöffnung 13 und eine

Aussparung im Halteblech 3 in einen Direkteinströmbereich 21 des Gassackes 6 (vgl. Figur 5). Dabei entfaltet sich der Gassack 6 in Ausstoßrichtung A (vgl. Figur 1).

Durch den Falz 17 wird ein Überströmen des Gases aus dem Direkteinströmbereich 21 in einen Nachströmbereich 22 des Gassackes 6 vermieden bzw. reduziert. Der Direkteinströmbereich 21 umfasst den Bereich im Inneren des Gassackes 6, der die Gaseintrittsöffnung 13 umfasst, durch die das Innere des Gassackes 6 mit einem nicht dargestellten Gasgenerator verbunden ist, und der von den Nähten 12 und zumindest dem Falz 17 begrenzt ist. Im gezeigten Beispiel ist der Direkteinströmbereich 21 auch von den beiden Seitenfalzen 11 begrenzt.

Beim Füllvorgang des Direkteinströmbereiches 21 werden zunächst die Seitenbereiche 14 ausgestülpt, wobei die Seitenfalze 11 geglättet werden. Dadurch verbreitert sich die Ausdehnung des Gassackes 6 in x-Richtung über die Modulbreite b hinaus und dient zum Schutz beider Knie eines Fahrzeuginsassen 5. Die Knie des Fahrzeuginsassen 5 sind in der Idealstellung in z-Richtung hintereinander angeordnet.

Der gasgefüllte Direkteinströmbereich 21 bildet zwischen den Schienbeinen des Fahrzeuginsassen 5 und der Instrumententafel 2 eine erste Blase, an der sich bei fortschreitender Entfaltung die übrigen Gassackbereiche nach unten hin abstützen können. Durch den aufgeblasenen Direkteinströmbereich 21 des Gassackes 6 wird eine Entfaltung der übrigen Gassackbereiche in den Fußraum des Kraftfahrzeuges behindert. Dies liegt daran, dass der Direkteinströmbereich 21 in seiner Einbauposition an der Seite des Knieairbagmoduls 4 angeordnet ist, die dem Fahrzeugboden zugewandt ist.

Übersteigt der Innendruck im Gassack 6 ein vorbestimmbares Niveau, löst sich die Verbindung zwischen der Lasche 9 und dem Gassack 6 auf Grund einer resultierenden Spannkraft an der zwischen der Lasche 9 und dem Gassack als Trennstelle vordefinierten Stelle (Reißnähte 10 bzw. Perforation 16). Danach wird der Nachströmbereich 22 nicht mehr mittels der Lasche 9 am Kraftfahrzeug gehalten und kann aus dem Modulgehäuse 7 austreten. Er füllt sich vollständig mit Gas, das vom Direkteinströmbereich 21 über den sich glättenden Falz 17 in ihn einströmt.

Der bereits aufgeblasene Direkteinströmbereich 21 behindert eine Ausbreitung des Nachströmbereiches 22 in Richtung der Füße des Fahrzeuginsassen 5 und bewirkt daher eine Entfaltung des Nachströmbereiches 22 nach oben hin in den Kniebereich des Fahrzeuginsassen 5. Diese zweite Entfaltungsstufe erfolgt in Entfaltungsrichtung E (vgl. Figur 1). Beim Aufprall der Schienbeine und Knie des Fahrzeuginsassen 5 auf den Gassack 6 erstreckt sich dieser vom Befestigungsbereich 8 in Entfaltungsrichtung E bis zu den Knien des Insassen.

Durch diese Anordnung wird eine optimale Positionierung und Entfaltung des Gassackes 6 gewährleistet.

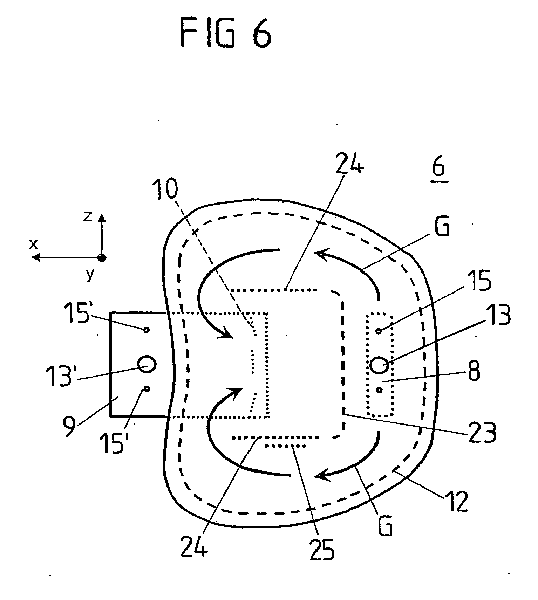

Durch den in Figur 6 gezeigten Gassack 6 im ungefalteten und unaufgeblasenen Zustand wird das Aufblasverhalten gegenüber den Gassäcken der Figuren 1 bis 5 noch weiter verbessert. Der Gassack 6 entspricht größtenteils dem in Figur 2 dargestellten Gassack. Im Unterschied dazu ist jedoch der zweite, lösbare Befestigungsbereich 9 an der Unterplatte im Bereich des späteren Falzes 17 (vgl. Figur 4) durch Reißnähte 10 mit dem Gassack verbunden.

In z-Richtung, also quer zur Fahrzeuglängsachse, ist zwischen der Gaseinströmöffnung 13 und dem Mittelpunkt des Gassackes 6 eine feste Verbindungsnaht 23 eingenäht, die Ober- und Unterplatte fest miteinander verbindet. Durch die Verbindungsnaht 23 wird verhindert, dass beim Aufblasen des Gassackes 6 Gas von der Gaseintrittsöffnung 13 direkt in Richtung Gassackmittelpunkt strömt. Das einströmende Gas wird vielmehr in die seitlichen Bereiche des Gassackes entlang einer Gasströmrichtung G geleitet. Die feste Verbindungsnaht 23 muss dabei nicht 100% luftdicht ausgebildet sein, sondern kann auch ein wenig gasdurchlässig ausgebildet sein. Wesentlich dabei ist, dass der Großteil des Gases zunächst in die Seitenbereiche strömt.

Beim Einströmen von Gas in den Gassack 6 entfalten sich aufgrund der Verbindungsnaht 23 zunächst die Seitenbereiche, die (wie in Figur 3 gezeigt) im Einbauzustand entlang zweier Seitenfalze 11 nach innen gestülpt sind. Dies ist von Vorteil, da so der Kniebag schnellstmöglich seine maximale Funktionsbreite erreicht. Bedingt durch das seitliche Einfalten bzw. Einstülpen der seitlichen Bereiche 14 (vgl. Figur 3) auf Modulbreite würde ohne Verbindungsnaht 23 zunächst der dazwischen liegende mittlere Gassackbereich befüllt. Die sich dadurch bildende Blase drückt unter Umständen die Knie des zu schützenden Fahrzeuginsassen auseinander, was sich ungünstig auf die spätere Rückhaltung auswirkt. Dies ist insbesondere der Fall, falls der Fahrgast seine Knie in einer auseinander gespreizten Haltung hat. Durch die Verbindungsnaht 23 wird somit ein Schutz auf voller Airbagbreite gewährleistet.

Die Verbindungsnaht 23 erstreckt sich im Wesentlichen von einem Seitenfalz 11 zur anderen, um einen möglichst großen Gasanteil in die seitlichen Bereiche zu leiten.

Parallel zu den beiden Seitenfalzen 11 weist der Gassack Reißnähte 24 auf, die in Fahrzeuglängsrichtung von den Enden der Verbindungsnaht 23 in Richtung von der Gaseinströmöffnung 13 weg verlaufen. Durch die Reißnähte 24 wird verhindert, dass Gas direkt nach Umströmen der Verbindung 23 in den mittleren Bereich des Gassackes 6 zurückströmt. Durch die Reißnähte 24 wird das Gas in den seitlichen Bereichen gehalten, bis diese nahezu vollständig mit Gas gefüllt sind und eine vorbestimmbare Spannung aufbringen, die die Reißnähte einreißt. Dadurch werden die Ober- und Unterplatte nicht mehr entlang der Reißnähte 24 miteinander in Verbindung gehalten und ermöglichen so ein vollständiges Befüllen des Gassackes 6. Die Reißnähte 24 stellen lösbare Verbindungen dar, um zum späteren Abfedern der Knie eine ausreichende Gassacktiefe für den Energieabbau bereitzustellen.

In dem in Figur 6 gezeigten Ausführungsbeispiel ist eine Reißnaht 24 durch eine ebenfalls lösbare Verstärkung 25 verstärkt. Eine solche einseitige Verstärkung kann entweder dadurch bewirkt werden, dass an einer Seite mehrere Reißnähte angebracht sind, zum Aufreißen der einen Reißnaht eine höhere Aufreißkraft notwendig ist als für die andere oder aber insgesamt nur eine Reißnaht auf einer Seite vorgesehen ist. Die doppelte Reißnaht behindert die Entfaltung des Gassackes einseitig, z.B. in Richtung Mitteltunnel. Sie ist auf der Seite des Gassackes angeordnet, die im Einbauzustand dem Mitteltunnel des Fahrzeuges zugewandt ist. Falls sich in diese Richtung der Gassack zu früh voll entfaltet, wird eine unerwünschte Abstützwirkung am Mitteltunnel erzielt.

Alternativ zu der in der Figur 6 dargestellten Ausführungsform kann der Gassack auch die feste Verbindungsnaht 23 und zwei gleich lange Reißnähte 24 ohne die Verstärkung 25 aufweisen. Die optimale Entfaltung wird hier dadurch erreicht, dass die dem Mitteltunnel zugewandte Reißnaht 24 verstärkt ausgeführt wird, z.B. durch eine verringerte Stichweite oder eine höhere Fadenstärke.

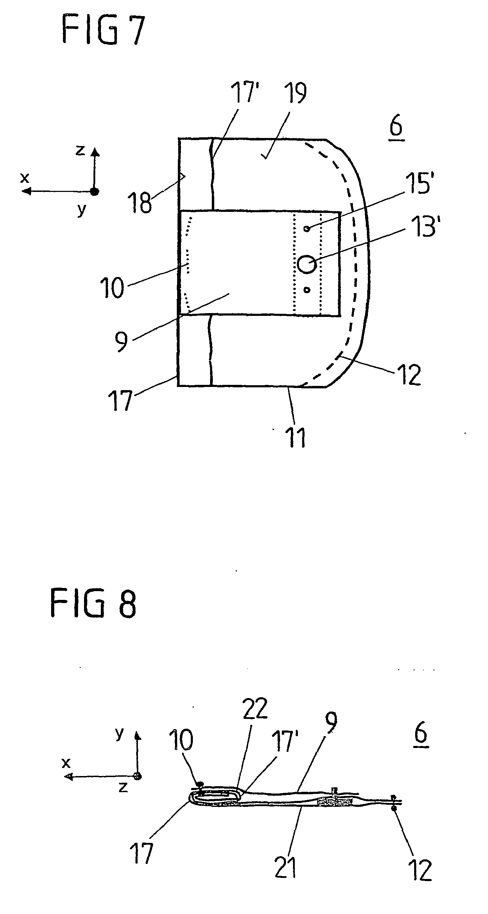

In den Figuren 7 und 8 ist eine weitere Faltungsweise eines Gassackes 6 mit lösbarem Befestigungsbereich 9 gezeigt. Wie in den in den Figuren 4 und 5 gezeigten Ausführungsbeispielen ist der Gassack 6 entlang eines Falzes 17 so gefaltet, dass der erste Befestigungsbereich 8 unterhalb des zweiten, lösbaren Befestigungsbereiches 9 zu liegen kommt und die beiden Gaseintrittsöffnungen 13 und 13' deckungsgleich aufeinander zu liegen kommen. Parallel zum Falz 17 ist der Gassack noch um einen Zusatzfalz 17' gefaltet, und zwar im Nachströmbereich 22 des Gassackes. Somit wird das Aufblasen des Nachströmbereiches 22 nicht nur durch den Falz 17, sondern zusätzlich auch durch den Zusatzfalz 17' verzögert. Alternativ zu einem zweiten Falz kann der Nachströmbereich 22 auch eingerollt sein, um einen Verzögerungseffekt zu erzielen.

### Bezugszeichenliste

- 2: Instrumententafel
- 3: Halteblech
- 3': Befestigungsfortsatz
- 4: Knieairbagmodul
- 5: Insasse
- 6: Gassack
- 7: Modulgehäuse
- 8: Befestigungsbereich
- 9: Lasche
- 10: Reißnaht
- 11: Seitenfalz
- 12: Naht
- 13: Gaseintrittsöffnung
- 13': Gaseintrittsöffnung
- 14: Seitenbereich
- 15: Befestigungselement
- 15': Befestigungselement
- 16: Perforation
- 17: Falz
- 17': Zusatzfalz
- 18: Unterplatte
- 19: Oberplatte
- 21: Direkteinströmbereich
- 22: Nachströmbereich
- 23: Verbindungsnaht
- 24: Reißnaht
- 25: Verstärkung
- A: Ausstoßrichtung
- b: Modulbreite
- E: Entfaltungsrichtung
- G: Gastrom

## Patentansprüche

1. Gassack (6) bestehend aus Gewebe für ein Kraftfahrzeug, der für ein derartiges Anbringen in einem Kraftfahrzeug ausgebildet und vorgesehen ist, dass er in einem Crash-Fall zum Abstützen der Knie eines Fahrzeuginsassen mit Gas aufblasbar ist, und der einen ersten Befestigungsbereich (8) zum Befestigen des Gassackes (6) an einem Kraftfahrzeugteil (7) aufweist,
**gekennzeichnet durch**
mindestens einen zweiten, lösbaren Befestigungsbereich (9) des Gassackes (6) zum Befestigen des Gassackes (6) an einem Kraftfahrzeugteil (7), wobei der zweite, lösbare Befestigungsbereich (9) und der erste Befestigungsbereich (8) an voneinander beabstandeten Stellen des Gassackes (6) ausgebildet sind, und in einer Verbindung zwischen dem zweiten, lösbaren Befestigungsbereich (9) und dem Gassack (6) eine Trennstelle (10, 16) zum Lösen der Verbindung unter Krafteinwirkung ausgebildet ist, wobei sich der zweite, lösbare Befestigungsbereich (9) vom Gassack (6) löst, wenn eine Kraft auf die Verbindung zwischen ihm und dem Gassack (6) wirkt, die einen vorbestimmbaren Wert übersteigt, wobei der erste Befestigungsbereich (8) und der zweite, lösbare Befestigungsbereich (9) aus einem Gewebe ausgebildet sind, aus dem auch der Gassack (6) ausgebildet ist.

2. Gassack nach Anspruch 1, **dadurch gekennzeichnet, dass** eine Spannkraft die Verbindung zwischen dem zweiten, lösbaren Befestigungsbereich (9) und dem Gassack (6) löst, die auf die Verbindung wirkt, wenn der Gassack (6) teilweise mit Gas gefüllt ist.

3. Gassack nach Anspruch 1 oder 2, **dadurch gekennzeichnet, dass** der zweite, lösbare Befestigungsbereich (9) mittels mindestens einer Reißleine, Reißnaht (10) und/oder Perforation (16) als Trennstelle lösbar mit dem Gassack (6) verbunden ist.

4. Gassack nach einem der vorangegangenen Ansprüche, **dadurch gekennzeichnet, dass** ein vorgesehenes Lösen des zweiten, lösbaren Befestigungsbereiches (9) vom Gassack (6) durch Krafteinwirkung so erfolgt, dass der Gassack (6) selber zum Abstützen der Knie eines Fahrzeuginsassen (5) funktionsfähig bleibt.

5. Gassack nach einem der vorangegangenen Ansprüche, **dadurch gekennzeichnet, dass** sich der zweite, lösbare Befestigungsbereich (9) bei geringeren Kräften vom Gassack (6) ablöst als der erste Befestigungsbereich (8).

6. Gassack nach einem der vorangegangenen Ansprüche, **dadurch gekennzeichnet, dass** der zweite, lösbare Befestigungsbereich (9) als Fortsatz, insbesondere als mindestens ein laschenförmiger Fortsatz am Gassack (6) ausgebildet ist.

7. Gassack nach einem der vorangegangen Ansprüche, **dadurch gekennzeichnet, dass** der erste Befestigungsbereich (8) so ausgebildet ist, dass er auch im aufgeblasenen Zustand des Gassackes (6) an seinem jeweiligen Kraftfahrzeugteil (7) befestigt ist.

8. Gassack nach einem der vorangegangenen Ansprüche, **dadurch gekennzeichnet, dass** die Befestigungsbereiche (8, 9) an einander gegenüberliegenden Enden des Gassackes (6) ausgebildet sind.

9. Gassack nach Anspruch8, **dadurch gekennzeichnet, dass** die Befestigungsbereiche (8, 9) im ungefalteten Zustand des Gassackes (6) an einander in Längsrichtung (x) des Kraftfahrzeuges gegenüberliegenden Enden des Gassackes (6) ausgebildet sind.

10. Gassack nach einem der vorangegangenen Ansprüche, **dadurch gekennzeichnet, dass** der erste Befestigungsbereich (8) oder der erste Befestigungsbereich (8) und der zweite lösbare Befestigungsbereich (9) zur Befestigung an einem Kraftfahrzeugteil (7) in Form eines Halteblechs (3) und/oder eines Gehäuses (7) vorgesehen ist/sind.

11. Gassack nach einem der vorangegangenen Ansprüche, **dadurch gekennzeichnet, dass** der erste Befestigungsbereich (8) eine Gaseintrittsöffnung (13) umfasst, durch die hindurch der Gassack (6) mit aus einer Aufblaseinrichtung stammendem Gas aufblasbar ist.

12. Gassack nach Anspruch 11, **dadurch gekennzeichnet, dass** der zweite, lösbare Befestigungsbereich (9) auch eine Gaseintrittsöffnung (13') umfasst, die in einem Einbauzustand des Gassackes (6) so auf der Gaseintrittsöffnung (13) des ersten Befestigungsbereichs (8) angeordnet ist, dass der Gassack (6) mit Gas aufblasbar ist, das durch beide Gaseintrittsöffnungen (13', 13) hindurch in den Gas einströmt.

13. Gassack nach Anspruch 12, **dadurch gekennzeichnet, dass** der Gassack (6) so gefaltet ist, dass der erste Befestigungsbereich (8) und der zweite, lösbare Befestigungsbereich (9) im Einbauzustand deckungsgleich aufeinander angeordnet sind.

14. Gassack nach einem der vorangegangenen Ansprüche, **dadurch gekennzeichnet, dass** der der erste Befestigungsbereich (8) und der zweite, lösbare Befestigungsbereich (9) an demselben Kraftfahrzeugteil (7) befestigt sind.

15. Gassack nach einem der vorangegangenen Ansprüche, **dadurch gekennzeichnet, dass** der erste Befestigungsbereich (8) und der zweite, lösbare Befestigungsbereich (9) gleiche Ausmaße aufweisen.

16. Gassack nach einem der vorangegangenen Ansprüche, **dadurch gekennzeichnet, dass** der Gassack (6) entlang eines Falzes (17) so gefaltet ist, dass die Befestigungsbereiche (8, 9) an Bereichen (21, 22) des Gassackes (6) ausgebildet sind, die durch den Falz (17) voneinander getrennt sind.

17. Gassack nach Anspruch 16, **dadurch gekennzeichnet, dass** der Gassack (6) entlang eines Falzes (17) gefaltet ist, der den ungefalteten Gassack (6) im Wesentlichen halbiert und zu dem die beiden Befestigungsbereiche (8; 9) im Wesentlichen achsensymmetrisch angeordnet sind.

18. Gassack nach Anspruch 16 oder 17, **dadurch gekennzeichnet, dass** der Falz (17) in einem Einbauzustand des Gassackes (6) im Wesentlichen quer zur Längsrichtung (x) des Kraftfahrzeuges ausgebildet ist.

19. Gassack nach einem der Ansprüche 16 bis 19, **gekennzeichnet durch** eine Gaseintrittsöffnung (13) des Gassackes (6) und **dadurch**, dass in einem der Gaseintrittsöffnung (13) abgewandten Bereich (22) des Gassackes (6) ein Zusatzfalz (17'), der sich im Wesentlichen parallel zum Falz (17) erstreckt, ausgebildet ist und/oder dieser Bereich (22) des Gassackes (6) aufgerollt ist.

20. Gassack nach einem der vorangegangenen Ansprüche, **dadurch gekennzeichnet, dass** der zweite, lösbare Befestigungsbereich (9) in einem Einbauzustand des Gassackes (6) oberhalb des ersten Befestigungsbereiches (8) angeordnet ist.

21. Gassack nach einem der vorangegangenen Ansprüche, **dadurch gekennzeichnet, dass** zwei Seitenbereiche (14) des Gassackes (6) im Einbauzustand entlang zweier sich in Fahrzeuglängsrichtung (x) erstreckender Seitenfalze (11) in Richtung Mittelpunkt des Gassackes (6) eingestülpt sind.

22. Gassack nach Anspruch 21, **gekennzeichnet durch** eine Verbindung (23) zweier Gassacklagen (18, 19) des Gassackes (6), die sich im Wesentlichen quer zur Fahrzeuglängsrichtung (x) und im Wesentlichen zwischen den beiden Seitenfalzen (11) so erstreckt und so angeordnet ist, dass **durch** eine Gaseintrittsöffnung (13) in den Gassack (6) einströmendes Gas in die eingestülpten Seitenbereiche (14) geleitet wird.

23. Gassack nach Anspruch 22, **gekennzeichnet durch** lösbare Verbindungen (24) zweier Gassacklagen (18, 19) des Gassackes (6), die an der der Gaseintrittsöffnung (13) abgewandten Seite der Verbindung (23) angeordnet sind und sich im Wesentlichen entlang der Seitenfalze (11) erstrecken.

24. Gassack nach Anspruch 22, **dadurch gekennzeichnet, dass** eine der lösbaren Verbindungen (24) verstärkt ist.

25. Verfahren zum Falten eines Gassackes nach einem der vorangegangenen Ansprüche, **dadurch gekennzeichnet, dass** der Gassack (6) so entlang eines Falzes (17) gefaltet wird, dass ein erster Bereich (21) des Gassackes (6), an dem der erste Befestigungsbereich (8) ausgebildet ist, durch den Falz (17) von einem zweiten Bereich (22) des Gassackes (6) getrennt wird, an dem der zweite, lösbare Befestigungsbereich (9) ausgebildet ist.

26. Verfahren nach Anspruch 25, **dadurch gekennzeichnet, dass** der Falz (17) in einer Einbaulage des Gassackes (6) im Kraftfahrzeug quer zur Längsrichtung (x) des Fahrzeuges angeordnet wird.

## Claims

1. Gas sack (6), composed of fabric, for a motor vehicle, which gas sack is designed and intended to be installed in a motor vehicle in such a way that, in the event of a crash, it can be inflated with gas in order to support the knees of a vehicle occupant, and which gas sack has a first fastening region (8) for fastening the gas sack (6) to a motor vehicle part (7),
**characterized by**
at least one second, detachable fastening region (9) of the gas sack (6) for fastening the gas sack (6) to a motor vehicle part (7), with the second, detachable fastening region (9) and the first fastening region (8) being formed at spaced-apart points of the gas sack (6), and with a separating point (10, 16) being formed in a connection between the second, detachable fastening region (9) and the gas sack (6) for releasing the connection under the action of a force, with the second, detachable fastening region (9) detaching from the gas sack (6) if a force exceeding a predeterminable value acts on the connection between it and the gas sack (6), and with the first fastening region (8) and the second, detachable fastening region (9) being formed from a fabric from which the gas sack (6) is also formed.

2. Gas sack according to Claim 1, **characterized in that** a tensile force detaches the connection between the second, detachable fastening region (9) and the gas sack (6), which tensile force acts on the connection when the gas sack (6) is partially filled with gas.

3. Gas sack according to Claim 1 or 2, **characterized in that** the second, detachable fastening region (9) is detachably connected to the gas sack (6) by means of at least one tear line, tear seam (10) and/or perforation (16) as a separating point.

4. Gas sack according to one of the preceding claims, **characterized in that** an intended detachment of the second, detachable fastening region (9) from the gas sack (6) as a result of the action of a force takes place in such a way that the gas sack (6) itself remains capable of supporting the knees of a vehicle occupant (5).

5. Gas sack according to one of the preceding claims, **characterized in that** the second, detachable fastening region (9) detaches from the gas sack (6) at lower forces then the first fastening region (8).

6. Gas sack according to one of the preceding claims, **characterized in that** the second, detachable fastening region (9) is embodied as a projection, in particular as at least one lug-shaped projection on the gas sack (6).

7. Gas sack according to one of the preceding claims, **characterized in that** the first fastening region (8) is designed so as to be fastened to its respective vehicle part (7) even in the inflated state of the gas sack (6).

8. Gas sack according to one of the preceding claims, **characterized in that** the fastening regions (8, 9) are formed on opposite ends of the gas sack (6).

9. Gas sack according to Claim 8, **characterized in that** the fastening regions (8, 9) are formed on opposite ends of the gas sack (6) in the longitudinal direction (x) of the motor vehicle in the unfolded state of the gas sack (6).

10. Gas sack according to one of the preceding claims, **characterized in that** the first fastening region (8) or the first fastening region (8) and the second, detachable fastening region (9) for fastening to a motor vehicle part (7) is/are provided in the form of a retaining plate (3) and/or in the form of a housing (7).

11. Gas sack according to one of the preceding claims, **characterized in that** the first fastening region (8) comprises a gas inlet opening (13) through which the gas sack (6) can be inflated with gas originating from an inflating device.

12. Gas sack according to Claim 11, **characterized in that** the second, detachable fastening region (9) also comprises a gas inlet opening (13') which, in an installed state of the gas sack (6), is arranged on the gas inlet opening (13) of the first fastening region (8) in such a way that the gas sack (6) can be inflated with gas which flows in through both gas inlet openings (13', 13).

13. Gas sack according to Claim 12, **characterized in that** the gas sack (6) is folded in such a way that, in the installed state, the first fastening region (8) and the second, detachable fastening region (9) are arranged congruently on one another.

14. Gas sack according to one of the preceding claims, **characterized in that** the first fastening region (8) and the second, detachable fastening region (9) are fastened to the same motor vehicle part (7).

15. Gas sack according to one of the preceding claims, **characterized in that** the first fastening region (8) and the second, detachable fastening region (9) have the same dimensions.

16. Gas sack according to one of the preceding claims, **characterized in that** the gas sack (6) is folded along one fold (17) in such a way that the fastening regions (8, 9) are formed on regions (21, 22) of the gas sack (6) which are separated from one another by the fold (17).

17. Gas sack according to Claim 16, **characterized in that** the gas sack (6) is folded along a fold (17) which substantially divides the unfolded gas sack (6) in half and about which the two fastening regions (8; 9) are arranged substantially axially symmetrically.

18. Gas sack according to Claim 16 or 17, **characterized in that**, in an installed state of the gas sack (6), the fold (17) is formed substantially transversely with respect to the longitudinal direction (x) of the motor vehicle.

19. Gas sack according to one of Claims 16 to 19, **characterized by** a gas inlet opening (13) of the gas sack (6) and in that an additional fold (17'), which extends substantially parallel to the fold (17), is formed in a region (22), which faces away from the gas inlet opening (13), of the gas sack (6), and/or in that said region (22) of the gas sack (6) is rolled up.

20. Gas sack according to one of the preceding claims, **characterized in that**, in an installed state of the gas sack (6), the second, detachable fastening region (9) is arranged above the first fastening region (8).

21. Gas sack according to one of the preceding claims, **characterized in that** two side regions (14) of the gas sack (6) in the installed state are turned inward, in the direction of the central point of the gas sack (6), along two side folds (11) which extend in the vehicle longitudinal direction (x).

22. Gas sack according to Claim 21, **characterized by** a connection (23) of two gas sack layers (18, 19) of the gas sack (6), which connection (23) extends and is arranged substantially transversely with respect to the vehicle longitudinal direction (x) and substantially between the two side folds (11) in such a way that gas flowing into the gas sack (6) through a gas inlet opening (13) is conducted into the turned-inward side regions (14).

23. Gas sack according to Claim 22, **characterized by** detachable connections (24) of two gas sack layers (18, 19) of the gas sack (6), which detachable connections (24) are arranged at that side of the connection (23) which faces away from the gas inlet opening (13) and extend substantially along the side fold (11).

24. Gas sack according to Claim 22, **characterized in that** one of the detachable connections (24) is reinforced.

25. Method for folding a gas sack according to one of the preceding claims, **characterized in that** the gas sack (6) is folded along a fold (17) in such a way that a first region (21), on which the first fastening region (8) is formed, of the gas sack (6) is separated by the fold (17) from a second region (22), on which the second, detachable fastening region (9) is formed, of the gas sack (6).

26. Method according to Claim 25, **characterized in that**, in an installation position of the gas sack (6) in the motor vehicle, the fold (17) is arranged transversely with respect to the longitudinal direction (x) of the vehicle.

## Revendications

1. Coussin à gaz (6) à base de tissu destiné à un véhicule automobile, qui est réalisé et prévu pour un emplacement donné dans un véhicule, de telle sorte qu'il peut être gonflé avec du gaz lors d'une collision pour soutenir les genoux d'un passager de véhicule et qui présente une première zone de fixation (8) pour la fixation du coussin à gaz (6) sur une partie du véhicule (7),
**caractérisé par**
au moins une seconde zone de fixation (9) amovible du coussin à gaz (6) pour la fixation du coussin à gaz (6) sur une partie du véhicule (7), où la seconde zone de fixation (9) amovible et la première zone de fixation (8) sont réalisées en des endroits espacés les uns des autres du coussin à gaz (6), et un point de séparation (10, 16) destiné au détachement de la liaison sous l'effet de force est réalisé dans une liaison entre la seconde zone de fixation (9) amovible et le coussin à gaz (6), où la seconde zone de fixation (9) amovible se détache du coussin à gaz (6) lorsqu'une force agit sur la liaison entre lui et le coussin à gaz (6), qui dépasse une valeur prédéfinissable, où la première zone de fixation (8) et la seconde zone de fixation (9) amovible sont réalisées à base d'un tissu dans lequel le coussin à gaz (6) est également réalisé.

2. Coussin à gaz selon la revendication 1, **caractérisé en ce qu'**une force de tension détache la liaison entre la seconde zone de fixation (9) amovible et le coussin à gaz (6), qui agit sur la liaison lorsque le coussin à gaz (6) est rempli partiellement de gaz.

3. Coussin à gaz selon la revendication 1 ou 2, **caractérisé en ce que** la seconde zone de fixation (9) amovible est reliée au moyen d'au moins une corde de déchirure, d'un joint de déchirure (10) et/ou d'une perforation (16) comme point de séparation de façon amovible avec le coussin à gaz (6).

4. Coussin à gaz selon l'une quelconque des revendications précédentes, **caractérisé en ce qu'**un détachement prévu de la seconde zone de fixation (9) amovible du coussin à gaz (6) s'effectue par l'effet de force de telle sorte que le coussin à gaz (6) même reste fonctionnel même pour le soutien des genoux d'un passager du véhicule (5).

5. Coussin à gaz selon l'une quelconque des revendications précédentes, **caractérisé en ce que** la seconde zone de fixation (9) amovible se détache du coussin à gaz (6) avec des forces plus faibles que la première zone de fixation (8).

6. Coussin à gaz selon l'une quelconque des revendications précédentes, **caractérisé en ce que** la seconde zone de fixation (9) amovible est réalisée comme appendice, en particulier sous la forme d'au moins un prolongement en forme de patte sur le coussin à gaz (6).

7. Coussin à gaz selon l'une quelconque des revendications précédentes, **caractérisé en ce que** la première zone de fixation (8) est réalisée de telle sorte qu'elle peut être fixée sur sa partie de véhicule (7) respective même lorsque le coussin à gaz (6) est gonflé.

8. Coussin à gaz selon l'une quelconque des revendications précédentes, **caractérisé en ce que** les zones de fixation (8, 9) sont réalisées sur des extrémités qui se font face du coussin à gaz (6).

9. Coussin à gaz selon la revendication 8, **caractérisé en ce que** les zones de fixation (8, 9) sont réalisées, lorsque le coussin à gaz (6) n'est pas plié, sur des extrémités se faisant face dans le sens longitudinal (x) du véhicule, du coussin à gaz (6).

10. Coussin à gaz selon l'une quelconque des revendications précédentes, **caractérisé en ce que** la première zone de fixation (8) ou la première zone de fixation (8) et la seconde zone de fixation (9) amovible est/sont prévue(s) pour la fixation sur une partie du véhicule (7) sous la forme d'une tôle de retenue (3) et/ou d'un boîtier (7).

11. Coussin à gaz selon l'une quelconque des revendications précédentes, **caractérisé en ce que** la première zone de fixation (8) comprend un orifice d'entrée de gaz (13) à travers lequel le coussin à gaz (6) peut être gonflé avec du gaz provenant d'un dispositif de gonflage.

12. Coussin à gaz selon la revendication 11, **caractérisé en ce que** la seconde zone de fixation (9) amovible comprend également un orifice d'entrée de gaz (13'), qui est disposé sur l'orifice d'entrée de gaz (13) de la première zone de fixation (8) lorsque le coussin à gaz (6) est monté, de telle sorte que le coussin à gaz (6) peut être gonflé avec du gaz qui entre à travers les deux orifices d'entrée de gaz (13', 13) dans le gaz.

13. Coussin à gaz selon la revendication 12, **caractérisé en ce que** le coussin à gaz (6) est plié de telle sorte que la première zone de fixation (8) et la seconde zone de fixation (9) amovible sont disposées l'une sur l'autre en recouvrement dans l'état de montage.

14. Coussin à gaz selon l'une quelconque des revendications précédentes, **caractérisé en ce que** la première zone de fixation (8) et la seconde zone de fixation (9) amovible sont fixées sur la même partie du véhicule (7).

15. Coussin à gaz selon l'une quelconque des revendications précédentes, **caractérisé en ce que** la première zone de fixation (8) et la seconde zone de fixation (9) amovible présentent des dimensions identiques.

16. Coussin à gaz selon l'une quelconque des revendications précédentes, **caractérisé en ce que** le coussin à gaz (6) est plié le long d'un pli (17) de telle sorte que les zones de fixation (8, 9) sont réalisées sur des zones (21, 22) du coussin à gaz (6), qui sont séparées l'une de l'autre par le pli (17).

17. Coussin à gaz selon la revendication 16, **caractérisé en ce que** le coussin à gaz (6) est plié le long d'un pli (17), qui divise sensiblement en deux le coussin à gaz (6) non plié et par rapport auquel les deux zones de fixation (8 ; 9) sont disposées de façon sensiblement symétrique par rapport à l'axe.

18. Coussin à gaz selon la revendication 16 ou 17, **caractérisé en ce que** le pli (17) est réalisé sensiblement transversalement à l'axe longitudinal (x) du véhicule lorsque le coussin à gaz (6) est monté.

19. Coussin à gaz selon l'une quelconque des revendications 16 à 19, **caractérisé par** un orifice d'entrée de gaz (13) du coussin à gaz (6) et par le fait qu'un pli supplémentaire (17'), qui s'étend sensiblement parallèlement au pli (17), est réalisé dans une zone (22), opposée à l'orifice d'entrée de gaz (13), du coussin à gaz (6), et/ou cette zone (22) du coussin à gaz (6) est enroulée.

20. Coussin à gaz selon l'une quelconque des revendications précédentes, **caractérisé en ce que** la seconde zone de fixation (9) amovible est disposée dans un état de montage du coussin à gaz (6) au-dessus de la première zone de fixation (8).

21. Coussin à gaz selon l'une quelconque des revendications précédentes, **caractérisé en ce que** deux zones latérales (14) du coussin à gaz (6) sont retournées vers l'intérieur dans l'état de montage, le long de deux plis latéraux (11) s'étendant dans la direction longitudinale du véhicule (x), en direction du centre du coussin à gaz (6).

22. Coussin à gaz selon la revendication 21, **caractérisé par** une liaison (23) de deux positions de coussin à gaz (18, 19) du coussin à gaz (6), qui s'étend sensiblement transversalement à la direction longitudinale du véhicule (x) et sensiblement entre les deux plis latéraux (11) et est disposé de telle sorte que du gaz entrant par un orifice d'entrée de gaz (13) dans le coussin à gaz (6) soit guidé dans les zones latérales (14) retournées vers l'intérieur.

23. Coussin à gaz selon la revendication 22, **caractérisé par** des liaisons (24) amovibles de deux couches de coussin à gaz (18, 19) du coussin à gaz (6), qui sont disposées sur le côté, opposé à l'orifice d'entrée de gaz (13), de la liaison (23) et s'étendent sensiblement le long des plis latéraux (11).

24. Coussin à gaz selon la revendication 22, **caractérisé en ce que** l'une des liaisons (24) amovible est renforcée.

25. Procédé pour le pliage d'un coussin à gaz selon l'une quelconque des revendications précédentes, **caractérisé en ce que** le coussin à gaz (6) est plié le long d'un pli (17) de telle sorte qu'une première zone (21) du coussin à gaz (6) sur laquelle la première zone de fixation (8) est réalisée, est séparée par le pli (17) d'une seconde zone (22) du coussin à gaz (6), sur laquelle la seconde zone de fixation (9) amovible est réalisée.

26. Procédé selon la revendication 25, **caractérisé en ce que** le pli (17) est disposé dans une position de montage du coussin à gaz (6) dans le véhicule transversalement à la direction longitudinale (x) du véhicule.
